Europäisches Patentamt

European Patent Office

Office européen des brevets

(19)

(11) Publication number: **0 243 329**
**A2**

(12) **EUROPEAN PATENT APPLICATION**

(21) Application number: **87850077.6**

(22) Date of filing: **11.03.87**

(51) Int. Cl.⁴: **H 02 G 11/00**
F 03 B 13/00, F 04 B 47/00

(30) Priority: **09.04.86 SE 8601584**

(43) Date of publication of application:
**28.10.87 Bulletin 87/44**

(84) Designated Contracting States:
**AT DE ES FR GB IT NL SE**

(71) Applicant: **Flygt AB**
**Box 1309**
**S-171 25 Solna (SE)**

(72) Inventor: **Kaiserfeld, Guido**
**Folkungagatan 69 IV**
**S-116 22 Stockholm (SE)**

(74) Representative: **Larsson, Sten**
**Flygt AB Box 1309**
**S-171 25 Solna (SE)**

(54) **A device for transport of cable.**

(57) The invention concerns a device for transport of a cable in vertical shafts.

The cable (3) is attached to a number of sliding means or trolleys (5) at regular intervals arranged to slide or roll along a vertical guiding rail (4), the sliding means or trolleys in their turn being rigidly attached to a lifting wire (6) at regular intervals.

Fig 1

EP 0 243 329 A2

## Description

### A Device for Cable Transport

This invention concerns a device for transport of a cable in vertical shafts.

At installations of submersible pumps, mixers and turbines in vertical or inclined pipes, the unit must be possible to be taken up and out of the pipe for service etc. An example of such an installation is shown in the US Pat No 4437017.

A problem which then arises is that the electric cable connected to the pump- or the turbine unit may be squeezed and damaged during the hoisting. This is of course mainly true at deep shafts where it is impossible to visually supervise the cable during the initial part of the hoisting. Up to now the hoisting of the cable has been carried out more or less by instinct, which of course is far from satisfactory. In addition the cable may begin to swing and wear against surrounding parts thus obtaining risks for cable break.

According to the invention the problem to protect the cable during hoisting and lowering of the submersible unit is solved by help of the device stated in the claims.

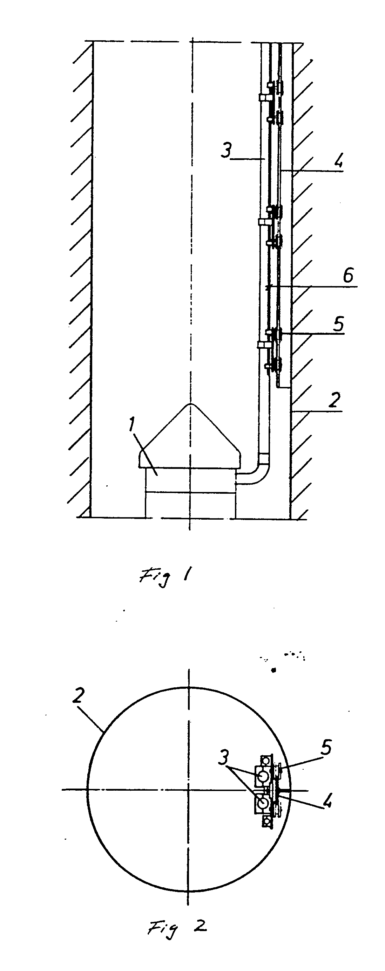

The invention is more closely described below with reference to the enclosed drawing.

In the drawing 1 stands for a submersible pump unit or turbine lowered along a vertical tube 2. 3 stands for an electric cable, 4 a guiding rail, 5 sliding means or trolleys and 6 a lifting wire.

According to the invention a T-shaped guiding rail 4 is arranged within the pipe 2, which rail extends along the entire length from the upper end of the pipe down to the working level of the unit 1. The rail is then so arranged that it makes no obstacle to the unit when the latter is moved within the pipe 2.

A number of sliding means or trolleys 5 are arranged to be moved along the rail 4, said means 5 being connected to a lifting wire 6 with predetermined mutual distances. The electric wire 3 of the unit 1 is connected to the means 5 and is thus kept near the pipe wall when the unit 1 is operating.

When the unit shall be hoisted up a lifting device is arranged at the upper end of the pipe 2 which transports the unit at a certain speed. The same lifting device or a separate one simultanously lifts the lifting wire 6 with the same speed. The sliding means or trolleys 5 and thereby the electric cable will then be lifted at a correct speed avoidning squeezing as well as a stretching of the cable.

The lifting wire with the means or trolleys and the cable may be wound on a suitable drum or be stored in some other way until the unit 1 shall be lowered again. The unwinding from the drum is then carried out at a speed corresponding with the lowering speed of the unit.

By help of the invention a very reliable way to handle the electric cable of a submersible pump or turbine is obtained where risks for damages caused by squeezing are eliminated. In addition the cable is safely secured during operation which additionally increases safety.

### Claims

1. A device for transport of an electric cable connected to a submersible pump unit, a mixer, a turbine or the like, which is installed in a vertical or inclined pipe, **characterized** in, that the cable (3) at regular intervals is connected to a number of sliding means or trolleys (5) arranged to slide or roll along a guiding rail (4) arranged near the wall of the pipe (2), the sliding means or trolleys (5) in their turn being rigidly attached to a lifting wire (6) at regular intervals.

2. A device according to claim 1, **characterized** in, that the guiding rail (4) has a T-formed cross-section having its web attached to the pipe wall (2).

Fig 1

Fig 2